(19) **Europäisches Patentamt**
**European Patent Office**
**Office européen des brevets**

(11) **EP 3 893 660 B1**

(12) **FASCICULE DE BREVET EUROPEEN**

(45) Date de publication et mention de la délivrance du brevet:
**06.08.2025 Bulletin 2025/32**

(21) Numéro de dépôt: **19839402.5**

(22) Date de dépôt: **12.12.2019**

(51) Classification Internationale des Brevets (IPC):
*A23J 3/26* (2006.01)    *A23J 3/22* (2006.01)
*A23J 1/14* (2006.01)

(52) Classification Coopérative des Brevets (CPC):
(C-Sets disponibles)
**A23J 3/14; A23J 3/225; A23J 3/227; A23J 3/26;**
A23V 2002/00    (Cont.)

(86) Numéro de dépôt international:
**PCT/FR2019/053049**

(87) Numéro de publication internationale:
**WO 2020/120915 (18.06.2020 Gazette 2020/25)**

(54) **COMPOSITION COMPRENANT DES PROTEINES DE LEGUMINEUSES TEXTUREES**

ZUBEREITUNG ENTHALTEND TEXTURIERTES HÜLSENFRÜCHTE-PROTEIN

COMPOSITION COMPRISING TEXTURIZED LEGUME PROTEINS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2018 FR 1872778**

(43) Date de publication de la demande:
**20.10.2021 Bulletin 2021/42**

(73) Titulaire: **ROQUETTE FRERES**
**62136 Lestrem (FR)**

(72) Inventeurs:
• **BUCHE, Thomas**
**62120 QUIESTEDE (FR)**
• **DLUBAK, Charlotte**
**59940 ESTAIRES (FR)**
• **ENGEL, Andre**
**3633 BJ Vreeland (NL)**

(74) Mandataire: **Plasseraud IP**
**104 Rue de Richelieu**
**CS92104**
**75080 Paris Cedex 02 (FR)**

(56) Documents cités:
**WO-A1-2007/017571     WO-A1-2013/036149**
**FR-A1- 2 340 054     FR-A1- 2 389 336**
**US-A1- 2012 171 351**

(52) Classification Coopérative des Brevets (CPC):
(Cont.)

C-Sets
A23V 2002/00, A23V 2200/15, A23V 2200/262,
A23V 2200/264, A23V 2250/5116, A23V 2250/548,
A23V 2300/16

**Description**

La présente invention est relative à une composition spécifique comprenant des protéines de pois texturées, ainsi qu'à son procédé de fabrication.

La technique de texturation des protéines, notamment par cuisson-extrusion, dans le but de préparer des produits à structure fibreuse destinés à la réalisation d'analogues de viande et de poisson, a été appliquée à de nombreuses sources végétales.

On peut séparer en deux grandes familles les procédés de cuisson-extrusion des protéines de par la quantité d'eau mise en œuvre lors du procédé. Lorsque cette quantité est supérieure à 30% en poids, on parlera de cuisson-extrusion dite « humide » et les produits obtenus seront plutôt destinés à la production de produits finis à consommation immédiate, simulant la viande animale par exemple des steaks de bœuf ou bien des nuggets de poulet. Lorsque cette quantité d'eau est inférieure à 30% en poids, on parle alors de cuisson-extrusion « sèche » : les produits obtenus sont plutôt destinés à être utilisés par les industriels de l'agroalimentaire, afin de formuler des succédanés de viandes, en les mélangeant avec d'autres ingrédients. Le domaine de la présente invention est bien celui de la cuisson-extrusion « sèche ».

Historiquement, les premières protéines utilisées comme analogues de viande ont été extraites du soja et du blé. Le soja est ensuite rapidement devenu la source principale pour ce domaine d'applications.

Si la plupart des études qui ont suivi ont naturellement porté sur les protéines de soja, d'autres sources de protéines, tant animales que végétales, ont été texturées : protéines d'arachide, de sésame, de graines de coton, de tournesol, de maïs, de blé, protéines issues de microorganismes, de sous-produits d'abattoirs ou de l'industrie du poisson.

Les protéines de légumineuses telles que celles issues du pois et de la féverole ont fait aussi l'objet de travaux, tant dans le domaine de leur isolement que dans celui de leur cuisson-extrusion « sèche ».

De nombreuses études ont été entreprises sur les protéines de pois, étant donné leurs propriétés fonctionnelles et nutritives particulières, mais aussi pour leur caractère non génétiquement modifié. Par exemple, des compositions de protéines de pois granulées sont décrites dans WO 2007/017571 A1.

Malgré les efforts de recherche importants et une croissance importante au cours de ces dernières années, la pénétration de ces produits à base de protéines de pois sur le marché alimentaire est restée encore trop limitée.

Une des raisons limitant cette expansion tient dans la procédure de réhydratation nécessaire des protéines de pois texturées avant de les formuler.

En effet, celles-ci étant sèches, il est nécessaire de les réhydrater afin de pouvoir les mettre en forme et les mélanger intimement aux autres constituants de la formulation pour obtenir un résultat final satisfaisant.

Pour ce faire, les protéines de pois texturées par voie sèche vont être placées en contact avec une solution aqueuse. Malheureusement, la quantité d'eau absorbée aux fins de réhydratation n'est pas assez efficace et, sans intervention humaine supplémentaire, celle-ci n'est d'environ que de 50% de la quantité nécessaire pour les étapes de formulation suivantes.

Il est donc communément pratiqué une étape supplémentaire dite de « shredding » ou « cuterage » consistant en un hachage des fibres texturées réhydratées. Les fibres ainsi obtenues sont remise en contact avec une solution aqueuse et, du fait du hachage, vont pouvoir réabsorber la quantité d'eau nécessaire manquante.

Cette étape est compliquée car un hachage mal maitrisé peut endommager les protéines de pois texturées. C'est de plus une étape de préparation supplémentaire qui complexifie la mise en œuvre.

Il est du mérite de la demanderesse d'avoir résolu les problèmes ci-dessus et d'avoir développé une nouvelle composition spécifique comprenant des protéines de pois texturées, obtenue par cuisson-extrusion par voie sèche dont la mise en œuvre ne nécessite pas de « shredding » ou « hachage ».

Cette invention sera mieux comprise dans le chapitre suivant visant à exposer une description générale celle-ci.

**DESCRIPTION GENERALE DE LA PRESENTE INVENTION**

La présente invention est relative à une composition comprenant des protéines de légumineuses texturées par voie sèche caractérisée en ce que sa capacité de rétention d'eau mesurée par un test A décrit plus bas est supérieure à 3 g d'eau par g de protéines sèches, préférentiellement supérieure à 4 g d'eau par g de protéines sèches, plus préférentiellement comprise entre 4 g et 5 g. Ladite composition est susceptible d'être obtenue par un procédé de production d'une composition de protéines de légumineuses texturées par voie sèche comprenant les étapes suivantes :

1) Fourniture d'une poudre comprenant des protéines de légumineuses, choisies dans la liste constituée de la protéine de féverole et de la protéine de pois, et des fibres de légumineuses présentant un ratio en poids sec de protéines de légumineuses / fibres de légumineuses compris entre 70/30 et 90/10, préférentiellement compris entre 75/25 et 85/15;

2) Production d'une composition de protéine de légumineuses texturée ayant une densité comprise entre 40 g/L et

3

120 g/L, préférentiellement entre 60 g/L et 90 g/;

3) Compression de la composition de protéine de légumineuses texturée obtenue en étape 2 afin que la protéine texturée ait après compression une densité comprise entre 100 et 170 g/L, préférentiellement entre 130 g/L et 150 g/ l;

4) Optionnellement séchage de la composition comprimée.

De manière préférée, la protéine de légumineuse est choisie dans la liste constituée de la féverole et du pois. Le pois est particulièrement préféré.

Enfin, la matière sèche de la protéine de légumineuse texturée par voie sèche selon l'invention est supérieure à 80% en poids, préférentiellement supérieure à 90% en poids.

La présente invention est également relative à un procédé de production d'une composition de protéines de légumineuses telle que décrite ci-dessus caractérisé en ce que le procédé comprend les étapes suivantes :

1) Fourniture d'une poudre comprenant des protéines de légumineuses et des fibres de légumineuses présentant un ratio en poids sec de protéines de légumineuses / fibres de légumineuses compris entre 70/30 et 90/10, préférentiellement compris entre 75/25 et 85/15 ;

2) Production d'une composition de protéines de légumineuses texturées ayant une densité comprise entre 40 et 120 g/L, préférentiellement entre 60 et 90 g/L, à partir de la poudre obtenue à l'étape 1 ;

3) Compression de la composition de protéines de pois texturées obtenue en étape 2 ;

4) Optionnellement séchage de la composition ainsi obtenue.

La poudre comprenant des protéines de légumineuse et des fibres de légumineuses mise en œuvre à l'étape 1 peut être préparée par mélange desdites protéines et fibres. La poudre peut être constituée essentiellement de protéines de légumineuses et de fibres de légumineuse. Le terme « constitué essentiellement » signifie que la poudre peut comprendre des impuretés liées au procédé de fabrication des protéines et des fibres, telles que par exemple des traces d'amidon. De manière préférée, la protéine et la fibre de légumineuse sont choisies dans la liste composée de la féverole et du pois. Le pois est particulièrement préféré.

De manière préférée, l'étape 2 est réalisée par cuisson-extrusion dans un extrudeur bi-vis en appliquant au mélange de poudre une énergie spécifique comprise entre 20 et 30 kWh/kg et en régulant la pression en sortie dans une gamme comprise entre 70 et 90 bars. De manière encore plus préférée, l'extrudeur bi-vis est caractérisé par un ratio longueur/diamètre de 60, avec une filière en sortie d'un diamètre de 27mm.

De manière préférée, la température de la composition de protéine de pois texturée doit être comprise entre 30°C et 50°C, préférentiellement 40°C, lors de l'étape 3 de compression.

De manière préférée, la compression de l'étape 3 est caractérisée en ce que la protéine texturée ait après compression une densité comprise entre 100 et 170g/L, préférentiellement entre 130 g/L et 150 g/l.

De manière préférée, la compression effectué en étape 3 est effectuée sur un tambour-sécheur, notamment d'un diamètre de 300mm tournant à une vitesse comprise entre 10 et 20 tours/min, préférentiellement 16 tours/min, équipé de 4 cylindres satellites de 75mm dont l'entrefer avec le cylindre principal est compris dans l'intervalle 0,5mm et 1,5mm, préférentiellement 1mm.

La présente invention est enfin relative à l'utilisation de la composition de protéines de légumineuses texturées par voie sèche telle que décrite ci-dessus dans des applications industrielles telles que par exemple l'industrie alimentaire humaine et animale, la pharmacie industrielle ou la cosmétique.

La présente invention se comprendra mieux à la lecture de la description détaillée infra.

## DESCRIPTION DETAILLEE DE LA PRESENTE INVENTION

La présente invention est relative à une composition comprenant des protéines de légumineuses texturées par voie sèche caractérisée en ce que sa capacité de rétention d'eau mesurée par un test A décrit plus bas est supérieure à 3 g d'eau par g de protéines sèches, préférentiellement supérieure à 4 g d'eau par g de protéines sèches, plus préférentiellement comprise entre 4 g et 5 g. Ladite composition est susceptible d'être obtenue par un procédé de production d'une composition de protéines de légumineuses texturées par voie sèche comprenant les étapes suivantes :

1) Fourniture d'une poudre comprenant des protéines de légumineuses, choisies dans la liste constituée de la protéine de féverole et de la protéine de pois, et des fibres de légumineuses présentant un ratio en poids sec de protéines de légumineuses / fibres de légumineuses compris entre 70/30 et 90/10, préférentiellement compris entre 75/25 et 85/15;

2) Production d'une composition de protéine de légumineuses texturée ayant une densité comprise entre 40 g/L et 120 g/L, préférentiellement entre 60 g/L et 90 g/;

3) Compression de la composition de protéine de légumineuses texturée obtenue en étape 2 afin que la protéine texturée ait après compression une densité comprise entre 100 et 170 g/L, préférentiellement entre 130 g/L et 150 g/l;
4) Optionnellement séchage de la composition comprimée.

De manière préférée, la protéine de légumineuse est choisie dans la liste constituée de la protéine de féverole et de la protéine de pois. La protéine de pois est particulièrement préférée.

Le terme « légumineuses » est considéré ici comme la famille de plantes dicotylédones de l'ordre des Fabales. C'est l'une des plus importantes familles de plantes à fleurs, la troisième après les Orchidaceae et les Asteraceae par le nombre d'espèces. Elle compte environ 765 genres regroupant plus de 19 500 espèces. Plusieurs légumineuses sont d'importantes plantes cultivées parmi lesquelles le soja, les haricots, les pois, la féverole, le pois chiche, l'arachide, la lentille cultivée, la luzerne cultivée, différents trèfles, les fèves, le caroubier, la réglisse.

Le terme « pois » étant ici considéré dans son acception la plus large et incluant en particulier toutes les variétés de « pois lisse » (« smooth pea ») et « de pois ridés » (« wrinkled pea »), et toutes les variétés mutantes de « pois lisse » et de « pois ridé » et ce, quelles que soient les utilisations auxquelles on destine généralement lesdites variétés (alimentation humaine, nutrition animale et/ou autres utilisations).

Le terme « pois » dans la présente demande inclut les variétés de pois appartenant au genre Pisum et plus particulièrement aux espèces sativum et aestivum. Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Par « texturée » ou « texturation », on entend dans la présente demande tout procédé physique et/ou chimique visant à modifier une composition comportant des protéines afin de lui conférer une structure ordonnée spécifique. Dans le cadre de l'invention, la texturation de la protéine vise à donner l'aspect d'une fibre, telles que présentes dans les viandes animales.

Afin de mesurer la capacité de rétention d'eau, on utilise le test A dont le protocole est décrit ci-dessous :

a. Peser 20g d'échantillon à analyser dans un bécher
b. Ajouter de l'eau potable à température ambiante (20°C +/- 1°C) jusqu'à submersion complète de l'échantillon ;
c. Laisser en contact statique pendant 30 minutes ;
d. Séparer eau résiduelle et échantillon à l'aide d'un tamis ;
d. Peser le poids final P de l'échantillon réhydraté ;

Le calcul de la Capacité de rétention d'eau, exprimée en gramme d'eau par gramme de protéine analysée est le suivant :

$$\text{Capacité de Rétention en eau } = ( P - 20 ) / 20.$$

Par « eau potable » on entend dans la présente invention, une eau que l'on peut boire ou utiliser à des fins domestiques et industrielles sans risque pour la santé. De manière préférée, on entendra que cette eau possède une teneur en sulfate inférieure à 250 mg/l, une teneur en chlorures inférieure à 200 mg/l, une teneur en potassium inférieure à 12 mg/l, un pH compris entre 6,5 et 9 et un TH (Titre Hydrométrique, soit la dureté de l'eau, qui correspond à la mesure de la teneur d'une eau en ions calcium et magnésium) supérieur à 15 degrés français. Autrement dit, une eau potable ne doit pas posséder moins de 60 mg/l de calcium ou 36 mg/l de magnésium.

Comme indiqué ci-dessus, les compositions de protéine de pois texturées de l'art antérieur sont déjà bien connues et utilisées dans l'industrie alimentaire, en particulier dans les analogues de viande. Afin de les mettre en œuvre dans une recette, il est connu que la teneur en eau nécessaire est de minimum 3 g par g de protéines, 4 g étant préférée. Cette réhydratation va permettre de préparer les fibres à être incluses dans la formulation, en simulant au mieux les propriétés fonctionnelles de fibres de viande, et éviter la présence trop importante de parties mal réhydratées provoquant une sensation de dureté lors de la consommation finale. Il est aussi connu que cette réhydratation ne peut être réalisée en une seule étape.

L'homme du métier procédera tout d'abord à une première réhydratation en plaçant la protéine de pois texturée avec un solvant aqueux, en atteignant environ 2g d'eau par g de protéines. Puis, il procédera à une dilacération des fibres de protéines réhydratées. Sans être lié par une quelconque théorie, cette dilacération ou « shredding » va permettre de déstructurer les fibres et ouvrir ainsi les parties internes et permettre leur réhydratation. Il suffira donc de replacer les fibres de protéines rehydratées et destructurées en contact avec du solvant aqueux, la capacité de rétention en eau sera de 4 g par g de protéines minima.

On retrouve par exemple ce protocole sur la documentation technique du NUTRALYS® T70S produit et commercialisé par la demanderesse.

La dilacération ou « shredding » des protéines est une solution bien connue mais elle rajoute une étape, complexifiant le procédé de formulation final, engendrant une augmentation des coûts. De plus, cette dilacération si elle est mal maitrisée va provoquer une déstructuration trop importante des fibres, provoquant une perte des effets fonctionnels recherchés. Les fibres végétales en ayant été raccourcies simuleront moins bien les fibres de viande.

Enfin, la matière sèche de la protéine de légumineuse texturée par voie sèche selon l'invention est supérieure à 80% en poids, préférentiellement supérieure à 90% en poids.

La matière sèche est mesurée par toute méthode bien connue de l'homme de l'art. De manière préférentielle, la méthode dite « par dessiccation » est utilisée. Elle consiste à déterminer la quantité d'eau évaporée par chauffage d'une quantité connue d'un échantillon de masse connue.

La teneur en protéine de la composition selon l'invention est avantageusement comprise entre 60% et 80%, préférentiellement entre 70% et 80% en poids sur la matière sèche totale. Pour analyser cette teneur en protéines, n'importe quelle méthode bien connue par l'homme du métier est utilisable. De préférence, on dosera la quantité d'azote total et l'on multipliera cette teneur par le coefficient 6,25. Cette méthode est particulièrement connue et utilisée pour les protéines végétales.

La présente invention est également relative à un procédé de production d'une composition de protéines de légumineuses telles que décrites ci-dessus caractérisé en ce que le procédé comprend les étapes suivantes :

1. Fourniture d'une poudre comprenant des protéines de légumineuses et des fibres de légumineuses présentant un ratio en poids sec protéines de légumineuses / fibres de légumineuses compris entre 70/30 et 90/10, préférentiellement compris entre 75/25 et 85/15 ;
2. Production d'une composition de protéine de pois texturée ayant une densité comprise entre 40 et 120 g/L préférentiellement entre 60 et 90 g/L, à partir de la poudre obtenue à l'étape 1 ;
3. Compression de la composition de protéine de pois texturée obtenue en étape 2 ;
4. Optionnellement séchage de la composition ainsi obtenue.

De manière préférée, la protéine et la fibre de légumineuses de l'étape 1 sont choisies dans la liste constituée de la protéine de féverole et de la protéine de pois. La protéine de pois est particulièrement préférée.

La poudre comprenant des protéines de légumineuse et des fibres de légumineuses mise en œuvre à l'étape 1 peut être préparée par mélange desdites protéines et fibres. La poudre peut être constituée essentiellement de protéines de légumineuses et de fibres de légumineuse. Le terme « constitué essentiellement » signifie que la poudre peut comprendre des impuretés liées au procédé de fabrication des protéines et des fibres, telles que par exemple des traces d'amidon. Le mélange consiste à obtenir un mélange sec des différents constituants nécessaire à synthétiser la fibre végétale lors de l'étape 2.

Par « fibres de légumineuses », on entend toutes compositions comportant des polysaccharides peu ou non digestibles par le système digestif humain, extraites de légumineuses. De telles fibres sont extraites par tout procédé bien connu de l'homme du métier. Un exemple commercial d'une telle fibre est par exemple la fibre Pea Fiber I50 de la société Roquette.

Le mélange peut être réalisé en amont ou bien directement en alimentation de l'étape 2. Lors de ce mélange, on peut ajouter des additifs bien connus de l'homme du métier tels qu'arômes ou bien colorants

Dans un mode alternatif, le mélange fibre/protéines est naturellement obtenu par turboséparation d'une farine de légumineuses. Les graines de légumineuses sont nettoyées, débarrassées de leurs fibres externes et broyées en farine. La farine est ensuite turboséparée, ce qui consiste en l'application d'un courant d'air ascendant permettant une séparation des différentes particules selon leur densité. On arrive ainsi à concentrer la teneur en protéines dans les farines d'environ 20% à plus de 60%. De telles farines sont appelées « concentrats ». Ces concentrats contiennent également entre 10% et 20% de fibres de légumineuses.

Le ratio massique sec entre protéines et fibres est avantageusement compris entre 70/30 et 90/10, préférentiellement compris entre 75/25 et 85/15.

Lors de l'étape 2, ce mélange de poudres va ensuite être texturé ce qui revient à dire que les protéines et les fibres vont subir une déstructuration thermique et une réorganisation afin de former des fibres, allongement continu en lignes droites parallèles, simulant les fibres présentes dans les viandes. Tout procédé bien connu de l'homme du métier conviendra, en particulier par extrusion.

L'extrusion consiste à forcer un produit à s'écouler à travers un orifice de petite dimension, la filière, sous l'action de pressions et de forces de cisaillements élevées, grâce à la rotation d'une ou deux vis d'Archimède. L'échauffement qui en résulte provoque une cuisson et/ou dénaturation du produit d'où le terme parfois utilisé de "cuisson-extrusion", puis une expansion par évaporation de l'eau en sortie de filière. Cette technique permet d'élaborer des produits extrêmement divers dans leur composition, leur structure (forme expansée et alvéolée du produit) et leurs propriétés fonctionnelles et nutritionnelles (dénaturation des facteurs antinutritionnels ou toxiques, stérilisation des aliments par exemple). Le traitement de protéines conduit souvent à des modifications structurelles qui se traduisent par l'obtention de produits à l'aspect fibreux, simulant les fibres de viandes animales.

De par ses connaissances et selon le choix de l'appareillage, l'homme du métier réalisera cette texturation afin d'obtenir une protéine texturée végétale dont la densité est comprise entre 40 et 120 g/L ; préférentiellement 60 et 90 g/L.

Pour mesurer cette densité, le protocole baptisé Test B suivant est appliqué :

- Tare d'une éprouvette graduée de 2 litres ;
- Remplissage de l'éprouvette avec le produit à analyser. Il est parfois nécessaire de tasser à l'aide de petits chocs sur la paroi de l'éprouvette afin de s'assurer que le produit remplisse le volume des 2 litres ;
- Pesée du produit (Poids P (en grammes).

$$\text{Densité} = (\ P(g)\ /\ 2\ (L)\ )$$

De manière préférée, l'étape 2 est réalisée par cuisson-extrusion dans un extrudeur bi-vis en appliquant au mélange de poudre une énergie spécifique comprise entre 20 et 30 kWh/kg et en régulant la pression en sortie dans une gamme comprise entre 70 et 90 bars. De manière encore plus préférée, l'extrudeur bi-vis est caractérisé par un ratio longueur/diamètre de 60, avec un diamètre de vis de 27mm.

Dans ces conditions, pour un débit matière d'environ 35 kg/h, on introduira également de l'eau à un débit compris entre 5 et 7 kg/h, préférentiellement entre 5,5 et 6,5 kg/h.

Le profil de vis préféré utilisé comportera la répartition d'éléments suivants :

Entre 80 et 95% d'éléments de convoyage ;
Entre 2.5 et 10% d'éléments de pétrissage ;
Entre 2.5 et 10% d'éléments à pas inversé.

L'homme du métier saura de par ses connaissances de base de cette technologie obtenir le réglage parfait afin d'obtenir la densité désirée.

Ces conditions de conduite permettent d'obtenir facilement des protéines texturées dont la densité est convenable sur la majorité des cuiseur-extrudeurs du marché. L'homme du métier saura adapter facilement ces conditions si besoin était.

De manière préférée, la température de la composition de protéine de pois texturée lors de l'étape 3 de compression doit être comprise entre 30°C et 50°C, préférentiellement 40°C.

Si la densité des protéines extrudées est inférieure ou supérieure à la gamme précitée, l'étape 3 ci-dessous ne pourra être mise en œuvre de manière efficace.

De manière préférée, la compression de l'étape 3 est caractérisée en ce que la protéine texturée ait après compression une densité comprise entre 100 et 170 g/L, préférentiellement entre 130 g/L et 150 g/l.

L'étape 3 vise à comprimer par pression mécanique les protéines extrudées en étape 2. De manière étonnante, cette compression réalisée sur une protéine texturée dont la densité est comprise entre 40 et 120 g/L ; préférentiellement 60 et 90 g/L; permet l'obtention d'une protéine texturée dont la rétention finale est optimale, sans dilacération ou « shredding ». En effet, l'homme du métier aurait dû s'attendre après compression à déstructurer complètement la protéine texturée par cette compression mécanique, de fait que ces capacités fonctionnelles soient anéanties. La demanderesse a établi que c'était en fait le contraire, si tant est que l'on respecte le protocole décrit dans cette demande.

Tout type d'appareil permettant la compression mécanique de la protéine texturée afin de faire monter sa densité à une valeur comprise entre 100 et 170 g/L, préférentiellement entre 130 g/L et 150 g/l, convient.

De manière préférée, la compression effectuée en étape 3 est effectuée sur un tambour-sécheur, notamment d'un diamètre de 300mm tournant à une vitesse comprise entre 10 et 20 tours/min, préférentiellement 16 tours/min, équipé de 4 cylindres satellites de 75mm dont l'entrefer avec le cylindre principal est compris dans l'intervalle 0,5mm et 1,5mm, préférentiellement 1mm. Un appareil particulièrement préféré est le Tummers Machinebrouw B.V. type 350323.

La présente invention est enfin relative à l'utilisation de la composition de protéines de légumineuses texturées par voie sèche telle que décrite supra dans des applications industrielles telles que par exemple l'industrie alimentaire humaine et animale, la pharmacie industrielle ou la cosmétique. Une application particulière concerne l'utilisation de la composition selon l'invention pour la fabrication de substitut de viande, notamment de viande hachée.

L'invention sera mieux comprise à la lecture des exemples non limitatifs ci-dessous.

**Exemples**

Exemple 1A : Production d'une composition de protéines de légumineuses texturées par voie sèche selon l'invention

On réalise un mélange poudre constitué de 87% de NUTRALYS® F85M de la société ROQUETTE et 13% de fibre de pois I50M.

Ce mélange est introduit par gravité dans un extrudeur LEISTRITZ ZSE 27 MAXX de la société LEISTRITZ.

Le mélange est introduit avec un débit régulé de 35 kg/h. Une quantité de 5,5 kg/h d'eau est également introduite.

La vis d'extrusion, composée de 85 % d'éléments de convoyage, 5% d'éléments de pétrissage et 10% d'éléments à pas inversé, est mise en rotation à une vitesse comprise entre 1100 et 1200 tours/min et envoie le mélange dans une filière.

Cette conduite particulière génère un couple machine de 42% avec une pression en sortie de 91 bars. L'énergie spécifique du système est d'environ 24 KWh/Kg

Le produit est dirigé en sortie vers une filière constituée d'un trou cylindrique de 3mm, d'où est expulsée la protéine texturée qui est coupée en tronçons de 1mm environ à l'aide de couteaux.

Une mesure de densité de la protéine extrudée à l'aide du test B nous indique une valeur de 59 g/L.

La protéine extrudée ainsi produite est ensuite déposée au sommet du cylindre principal (d'un diamètre de 300mm) d'un tambour-sécheur Tummers MachineBouw B.V. type 3500323.

Le cylindre est mis en rotation à une vitesse de 16 tours/min, ladite rotation entrainant également les 4 cylindres périphériques (d'un diamètre de 75mm). L'entrefer ou distance entre cylindre principal et cylindres périphérique est de 1 mm.

La protéine est déposée à une température d'environ 40°C et va être comprimée entre les différents cylindres, puis va tomber en bas du tambour-sécheur dans un récipient.

Exemple 1B : Production d'une composition de protéines de légumineuses texturées par voie sèche selon l'invention

On réalise un mélange poudre constitué de 100% de concentrats de féverole VESTKORN « Faba Protein », contenant 65% de protéines et 15% de fibres.

Ce mélange est introduit par gravité dans un extrudeur COPERION ZSK 54 MV de la société COPERION.

Le mélange est introduit avec un débit régulé de 350 kg/h. Une quantité de 65 kg/h d'eau est également introduite.

La vis d'extrusion, composée de 85 % d'éléments de convoyage, 5% d'éléments de pétrissage et 10% d'éléments à pas inversé, est mise en rotation à une vitesse comprise entre 950 et 1100 tours/min et envoie le mélange dans une filière.

Cette conduite particulière génère un couple machine de $50 \pm 2\%$ avec une pression en sortie de $82 \pm 2$ bars. L'énergie spécifique du système est d'environ 24 kWh/kg.

Le produit est dirigé en sortie vers une filière constituée d'un trou cylindrique de 5mm, d'où est expulsée la protéine texturée qui est coupée en tronçons d'environ 3cm environ à l'aide de couteaux.

Une mesure de densité de la protéine extrudée à l'aide du test B nous indique une valeur de 84 g/L.

La protéine extrudée ainsi produite est ensuite déposée au sommet du cylindre principal (d'un diamètre de 300mm) d'un tambour-sécheur Tummers MachineBouw B.V. type 3500323.

Le cylindre est mis en rotation à une vitesse de 16 tours/min, ladite rotation entrainant également les 4 cylindres périphériques (d'un diamètre de 75mm). L'entrefer ou distance entre cylindre principal et cylindres périphérique est de 1 mm.

La protéine est déposée à une température d'environ 40°C et va être comprimée entre les différents cylindres, puis va tomber en bas du tambour-sécheur dans un récipient

Exemple 2 : Production d'une composition de protéines de légumineuses texturées par voie sèche selon l'art antérieur

On réalise un mélange poudre constitué de 87% en poids de NUTRALYS® F85M de la société ROQUETTE et 13% en poids de fibre de pois I50M.

Ce mélange est introduit par gravité dans un extrudeur LEISTRITZ ZSE 27 MAXX de la société LEISTRITZ.

Le mélange est introduit avec un débit régulé de 35 kg/h. Une quantité de 6,5 kg/h d'eau est également introduite.

La vis d'extrusion, composée de 85 % d'éléments de convoyage, 5% d'éléments de pétrissage et 10% d'éléments à pas inversé, est mise en rotation à une vitesse comprise entre 1100 et 1200 tours/min et envoie le mélange dans une filière.

Cette conduite particulière génère un couple machine de 41% avec une pression en sortie de 70 bars. L'énergie spécifique du système est d'environ 220 kw/kg.

Le produit est dirigé en sortie vers une filière constituée de deux trous cylindriques de 3mm, d'où est expulsée la protéine texturée qui est coupée en tronçons de 1mm environ à l'aide de couteaux.

Une mesure de densité de la protéine extrudée nous indique une valeur de 100 g/L.

Exemple 3 : Comparaison des compositions de protéines de légumineuses texturées par voie sèche obtenues dans les exemples ci-dessus et de compositions issues de l'art antérieur

On met en œuvre les protocoles décrits dans la partie supra de la description, afin de mesurer la densité selon le test B et la rétention en eau selon le test A.

On réalise également la mesure de la rétention d'eau « avec shredding » en modifiant le test A comme indiqué ci-dessous :

    a. Peser 40g d'échantillon à analyser dans un bécher ;

    b. Ajouter de l'eau potable à température ambiante (20°C +/- 1°C) jusqu'à submersion complète de l'échantillon ;

    c. Laisser en contact statique pendant 30 minutes

    d. Verser eau + protéine texturée dans un blender de Marque KENWOOD , équipé d'une lame de pâtisserie non coupante et broyer 45 secondes à vitesse 1 ;

    e. Séparer l'eau résiduelle et l'échantillon à l'aide d'un tamis ;

    f. Peser le poids final P de l'échantillon réhydraté.

Le calcul de la Capacité de rétention d'eau, exprimée en gramme d'eau par gramme de protéine analysée est le suivant :

$$\text{Capacité de Rétention en eau (en g)} = ( P - 40 ) / 40.$$

[Tableau 1]

| | Matière sèche (%) | Densité (g/L) | Rétention en eau sans shredding (g eau / g) | Rétention en eau avec shredding (g eau /g) |
|---|---|---|---|---|
| | | | 30min | 30min |
| Composition selon l'exemple 1A selon l'invention | 95 | 116 | 4,8 | 4,8 |
| Composition selon l'exemple 1B selon l'invention | 94 | 161 | 3,74 | 4,65 |
| Composition selon l'exemple 2 hors invention | 93 | 100 | 2,6 | 4,7 |
| NUTRALYS® T70S | 94 | 124 | 2,7 | 4,6 |

On s'aperçoit donc que seuls les produits selon l'invention 1A et 1B permettent d'obtenir une composition dont la Capacité de Rétention d'eau selon le test A (sans shredding) est supérieure à 3g d'eau par gramme de composition comprenant des protéines texturées.

Pour atteindre cette performance, les compositions selon l'art antérieur nécessitent une étape de shredding ou cutterage.

Exemple 4 : Mise en œuvre d'une composition de protéines de légumineuses texturées par voie sèche selon l'invention dans des analogues de viandes

On procède à la réalisation d'un steak-haché ou burger mettant en œuvre les compositions présentées dans les exemples 1A & 2.

Les ingrédients mis en œuvre sont les suivants (les quantités indiquées dans le tableau ci-dessous sont données en grammes pour 100g de burger final):

[tableau 2]

| Ingrédients | Recette burger #1 | Recette burger #2 | Recette burger #3 |
|---|---|---|---|
| Eau potable | 53,55 | | |
| Composition selon l'exemple 1A | 19,5 | | |
| Composition selon l'exemple 2 (hors invention) | | 19,5 | |
| Nutralys T70S | | | 19,5 |
| Glace pilée | 6 | | |
| Methylcellulose | 2 | | |
| Oignons | 5,9 | | |
| Huile de tournesol | 5,4 | | |
| Fécule de pomme de terre native | 2 | | |
| Fibre Pea Fiber I50 (Roquette) | 3 | | |
| Poudre d'ail | 0,5 | | |
| Sel | 0,2 | | |
| Poivre noir | 0,1 | | |

La procédure de production est la suivante :

1. Hydrater les protéines texturées dans de l'eau potable pendant 30 min
2. Uniquement pour les burgers 2 et 3 (hors invention), broyer pendant 45s le mélange protéines texturées/eau à l'aide d'un robot mixer KENWOOD, puis laisser de nouveau 30 min en contact
3. Mélanger methylcellulose et glace pilée dans un récipient, puis réserver 5 min au frigo.
4. Mélanger dans un autre récipient l'ensemble des autres ingrédients
5. Réunir dans un même récipient les mélanges obtenus aux étapes 1 (voire 2), 3 et 4 et mélanger afin d'obtenir une composition homogène.
6. Former manuellement des steaks hachés avec le mélange final d'une quantité d'environ 150g

Après dégustation par un panel de 10 personnes, il est reconnu que le burger #1 est plus proche d'un burger de viande animale : la sensation fibreuse y est plus présente lors de la dégustation.

## Revendications

**1.** Composition comprenant des protéines de légumineuses texturées par voie sèche **caractérisée en ce que** sa capacité de rétention d'eau mesurée par un test A tel que décrit dans la description est supérieure à 3 g d'eau par g de protéines sèches, préférentiellement supérieure à 4 g d'eau par g de protéines sèches, plus préférentiellement comprise entre 4g et 5g, **caractérisée en ce que** la protéine de légumineuse est choisie dans la liste constituée de la protéine de féverole et de la protéine de pois,
ladite composition étant susceptible d'être obtenue par un procédé de production d'une composition de protéines de légumineuses texturées par voie sèche comprenant les étapes suivantes :

1. Fourniture d'une poudre comprenant des protéines de légumineuses, choisies dans la liste constituée de la protéine de féverole et de la protéine de pois, et des fibres de légumineuses présentant un ratio en poids sec de protéines de légumineuses / fibres de légumineuses compris entre 70/30 et 90/10, préférentiellement compris entre 75/25 et 85/15 ;
2. Production d'une composition de protéine de légumineuses texturée ayant une densité comprise entre 40 g/L et 120 g/L, préférentiellement entre 60 g/L et 90 g/L ;
3. Compression de la composition de protéine de légumineuses texturée obtenue en étape 2 afin que la protéine texturée ait après compression une densité comprise entre 100 et 170 g/L, préférentiellement entre 130 g/L et 150 g/l;
4. Optionnellement séchage de la composition comprimée.

2.  Composition de protéines de légumineuses texturées par voie sèche selon la revendication 1 **caractérisée en ce que** la teneur en protéines de composition est comprise entre 60% et 80%, préférentiellement entre 70% et 80% en poids sur la matière sèche totale.

3.  Composition de protéines de légumineuses texturées par voie sèche selon les revendications 1 à 2 **caractérisée en ce qu'**elle présente une matière sèche supérieure à 80% en poids, préférentiellement supérieure à 90% en poids.

4.  Procédé de production d'une composition de protéines de légumineuses texturées par voie sèche **caractérisée en ce que** sa capacité de rétention d'eau mesurée par le test A est supérieure à 3 g d'eau par g de protéines sèches, préférentiellement supérieure à 4 g d'eau par g de protéines sèches, plus préférentiellement comprise entre 4g et 5g selon les revendications 1 à 3, **caractérisé en ce que** le procédé comprend les étapes suivantes:

    1. Fourniture d'une poudre comprenant des protéines de légumineuses et des fibres de légumineuses présentant un ratio en poids sec de protéines de légumineuses / fibres de légumineuses compris entre 70/30 et 90/10, préférentiellement compris entre 75/25 et 85/15 ;
    2. Production d'une composition de protéine de légumineuses texturée ayant une densité comprise entre 40 g/L et 120 g/L, préférentiellement entre 60 g/L et 90 g/L ;
    3. Compression de la composition de protéine de légumineuses texturée obtenue en étape 2 ;
    4. Optionnellement séchage de la composition comprimée

5.  Procédé de production d'une composition de protéines de légumineuses selon la revendication 4, **caractérisé en ce que** l'étape 2 est réalisée par cuisson-extrusion dans un extrudeur bi-vis en appliquant au mélange de poudre une énergie spécifique comprise entre 20 et 30 kWh/kg et en régulant la pression en sortie dans une gamme comprise entre 70 et 90 bars.

6.  Procédé de production d'une composition de protéines de légumineuses selon la revendication 4 ou 5, **caractérisé en ce que** la température de la composition de protéine de légumineuses texturée et comprimée est comprise entre 30°c et 50°C, préférentiellement 40°C lors de l'étape 3.

7.  Procédé de production d'une composition de protéines de légumineuses selon l'une quelconque des revendications 4 à 6, **caractérisé en ce que** la compression effectuée en étape 3 est effectuée sur un tambour-sécheur d'un diamètre de 300mm tournant à une vitesse comprise entre 10 et 20 tours/min, préférentiellement 16 tours/min, équipé de 4 cylindres satellites de 75mm dont l'entrefer avec le cylindre principal est compris dans l'intervalle 0,5mm et 1,5mm, préférentiellement 1mm.

8.  Utilisation de la composition de protéines de légumineuses texturées par voie sèche telle que décrite dans les revendications 1 à 3 ou produite selon le procédé décrit dans les revendications 4 à 7 dans des applications industrielles telles que par exemple l'industrie alimentaire humaine et animale, la pharmacie industrielle ou la cosmétique.

**Patentansprüche**

1.  Zusammensetzung, die trocken texturierte Leguminosenproteine umfasst, **dadurch gekennzeichnet, dass** ihre Wasserretentionsfähigkeit, gemessen mittels eines Tests A, wie in der Beschreibung beschrieben, größer als 3 g Wasser pro g Trockenproteine, bevorzugt größer als 4 g Wasser pro g Trockenprotein und stärker bevorzugt zwischen 4 g und 5 g ist, **dadurch gekennzeichnet, dass** das Leguminosenprotein aus der Liste gewählt ist, umfassend Ackerbohnenprotein und Erbsenprotein,
    wobei die Zusammensetzung durch ein Verfahren zur Herstellung einer trocken texturierten Leguminosenprotein-Zusammensetzung erhalten werden kann, das die folgenden Schritte umfasst:

    1. Bereitstellen eines Pulvers, das Leguminosenproteine umfasst, gewählt aus der Liste, umfassend Ackerbohnenprotein und Erbsenprotein, sowie Leguminosenfasern mit einem Trockengewichtsverhältnis von Leguminosenproteinen zu Leguminosenfasern zwischen 70/30 und 90/10, bevorzugt zwischen 75/25 und 85/15;
    2. Herstellung einer texturierten Leguminosenprotein-Zusammensetzung mit einer Dichte zwischen 40 g/l und 120 g/l, bevorzugt zwischen 60 g/l und 90 g/l;
    3. Komprimieren der in Schritt 2 erhaltenen texturierten Leguminosenprotein-Zusammensetzung, so dass das texturierte Protein nach dem Komprimieren eine Dichte zwischen 100 und 170 g/l, bevorzugt zwischen 130 g/l und 150 g/l aufweist;

4. Optional Trocknen der komprimierten Zusammensetzung.

**2.** Trocken texturierte Leguminosenprotein-Zusammensetzung nach Anspruch 1, **dadurch gekennzeichnet, dass** der Proteingehalt der Zusammensetzung zwischen 60 % und 80 %, bevorzugt zwischen 70 % und 80 Gew.-% der Gesamt-Trockenmasse beträgt.

**3.** Trocken texturierte Leguminosenprotein-Zusammensetzung nach den Ansprüchen 1 bis 2, **dadurch gekennzeichnet, dass** sie einen Trockengehalt von mehr als 80 Gew.-%, bevorzugt mehr als 90 Gew.-%, aufweist.

**4.** Verfahren zur Herstellung einer trocken texturierten Leguminosenprotein-Zusammensetzung, **dadurch gekennzeichnet, dass** ihre Wasserretentionsfähigkeit, gemessen mittels Test A, größer als 3 g Wasser pro g Trockenproteine ist, bevorzugt größer als 4 g Wasser pro g Trockenproteine, stärker bevorzugt zwischen 4 g und 5 g nach den Ansprüchen 1 bis 3, **dadurch gekennzeichnet, dass** das Verfahren die folgenden Schritte umfasst:

1. Bereitstellen eines Pulvers, das Leguminosenproteine und Leguminosenfasern mit einem Trockengewichtsverhältnis von Leguminosenproteinen zu Leguminosenfasern zwischen 70/30 und 90/10, bevorzugt zwischen 75/25 und 85/15, umfasst;
2. Herstellung einer texturierten Leguminosenprotein-Zusammensetzung mit einer Dichte zwischen 40 g/l und 120 g/l, bevorzugt zwischen 60 g/l und 90 g/l;
3. Komprimieren der in Schritt 2 erhaltenen texturierten Leguminosenprotein-Zusammensetzung;
4. Optional Trocknen der komprimierten Zusammensetzung.

**5.** Verfahren zur Herstellung einer Leguminosenprotein-Zusammensetzung nach Anspruch 4, **dadurch gekennzeichnet, dass** Schritt 2 durch Kochen-Extrudieren in einem Doppelschneckenextruder durchgeführt wird, wobei auf die Pulvermischung eine spezifische Energie zwischen 20 und 30 kWh/kg aufgebracht und der Ausgangsdruck in einem Bereich zwischen 70 und 90 bar geregelt wird.

**6.** Verfahren zur Herstellung einer Leguminosenprotein-Zusammensetzung nach Anspruch 4 oder 5, **dadurch gekennzeichnet, dass** die Temperatur der texturierten und komprimierten Leguminosenprotein-Zusammensetzung in Schritt 3 zwischen 30 °C und 50 °C, bevorzugt bei 40 °C, liegt.

**7.** Verfahren zur Herstellung einer Leguminosenprotein-Zusammensetzung nach einem der Ansprüche 4 bis 6, **dadurch gekennzeichnet, dass** die in Schritt 3 durchgeführte Komprimierung mittels einer Trockentrommel mit einem Durchmesser von 300 mm durchgeführt wird, die mit einer Geschwindigkeit zwischen 10 und 20 Umdrehungen/min dreht, bevorzugt mit 16 Umdrehungen/min, und die mit 4 Satellitenzylindern von 75 mm ausgestattet ist, deren Luftspalt zum Hauptzylinder im Bereich von 0,5 mm bis 1,5 mm, bevorzugt 1 mm, liegt.

**8.** Verwendung der trocken texturierten Leguminosen-Proteinzusammensetzung nach den Ansprüchen 1 bis 3 oder hergestellt nach dem Verfahren nach den Ansprüchen 4 bis 7 in industriellen Anwendungen, wie beispielsweise in der Lebensmittel- und Futtermittelindustrie, der industriellen Pharmazie oder der Kosmetik.

## Claims

**1.** A composition comprising leguminous proteins textured in a dry process, **characterized in that** the water retention capacity thereof measured by a test A as described in the description is greater than 3 g of water per g of dry proteins, preferentially greater than 4 g of water per g of dry proteins, more preferentially between 4 g and 5 g, **characterized in that** the leguminous protein is selected from the list consisting of faba bean protein and pea protein, said composition being obtainable by a method for producing a composition of leguminous proteins textured in a dry process, comprising the following steps:

1. Providing a powder comprising leguminous proteins, selected from the list consisting of faba bean protein and pea protein, and leguminous fibers having a dry weight ratio of leguminous proteins/leguminous fibers of between 70/30 and 90/10, preferentially of between 75/25 and 85/15;
2. Producing a textured leguminous protein composition having a density of between 40 g/l and 120 g/l, preferentially between 60 g/l and 90 g/l;
3. Compressing the textured leguminous protein composition obtained in step 2 so that, after compression, the textured protein has a density of between 100 and 170 g/l, preferentially between 130 g/l and 150 g/l;
4. Optionally drying the compressed composition.

2. The composition of leguminous proteins textured in a dry process according to claim 1, **characterized in that** the protein content of the composition is between 60% and 80%, preferentially between 70% and 80% by weight relative to the total dry matter.

3. The composition of leguminous proteins textured in a dry process according to claims 1 to 2, **characterized in that** is has a dry matter of greater than 80% by weight, preferentially of greater than 90% by weight.

4. A method for producing a composition of leguminous proteins textured in a dry process, **characterized in that** the water retention capacity thereof measured by the test A is greater than 3 g of water per g of dry proteins, preferentially greater than 4 g of water per g of dry proteins, more preferentially between 4 g and 5 g, according to claims 1 to 3, **characterized in that** the method comprises the following steps:

   1. Providing a powder comprising leguminous proteins and leguminous fibers having a dry weight ratio of leguminous proteins/leguminous fibers of between 70/30 and 90/10, preferentially of between 75/25 and 85/15;
   2. Producing a textured leguminous protein composition having a density of between 40 g/l and 120 g/l, preferentially between 60 g/l and 90 g/l;
   3. Compressing the textured pea protein composition obtained in step 2;
   4. Optionally drying the compressed composition

5. The method for producing a composition of leguminous proteins according to claim 4, **characterized in that** step 2 is carried out by extrusion cooking in a twin screw extruder by applying to the powder mixture a specific energy of between 20 and 30 kWh/kg and by regulating the outlet pressure in a range of between 70 and 90 bar.

6. The method for producing a composition of leguminous proteins according to claim 4 or 5, **characterized in that** the temperature of the textured and compressed pea protein composition is between 30°C and 50°C, preferentially 40°C, during step 3.

7. The method for producing a composition of leguminous proteins according to any one of claims 4 to 6, **characterized in that** the compression carried out in step 3 is performed in a drum dryer having a diameter of 300 mm, rotating at a speed of between 10 and 20 rpm, preferentially 16 rpm, fitted with 4 satellite cylinders of 75 mm, the gap between which and the main cylinder is within the range between 0.5 mm and 1.5 mm, preferentially 1 mm.

8. A use of the composition of leguminous proteins textured in a dry process as described in claims 1 to 3, or produced according to the method described in claims 4 to 7, in industrial applications such as for example the human and animal food industry, industrial pharmaceuticals or cosmetics.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007017571 A1

**Littérature non-brevet citée dans la description**

- **C-L HEYDLEY et al.** Developing novel pea starches. *Proceedings of the Symposium of the Industrial Biochemistry and Biotechnology Group of the Biochemical Society*, 1996, 77-87